(19) Europäisches Patentamt / European Patent Office / Office européen des brevets

(11) **EP 4 303 961 A1**

(12) **DEMANDE DE BREVET EUROPEEN**

(43) Date de publication:
**10.01.2024 Bulletin 2024/02**

(21) Numéro de dépôt: **22182849.4**

(22) Date de dépôt: **04.07.2022**

(51) Classification Internationale des Brevets (IPC):
**H01M 4/38** (2006.01)     **H01M 4/46** (2006.01)
**H01M 10/0565** (2010.01)

(52) Classification Coopérative des Brevets (CPC):
**H01M 10/0565; H01M 4/382; H01M 4/466;**
H01M 2300/0082

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **The Swatch Group Research and Development Ltd**
**2074 Marin (CH)**

(72) Inventeurs:
• **CAMILLO, Rémy**
  **2087 Cornaux (CH)**
• **MARINAKIS, Nathalie**
  **2074 Marin-Epagnier (CH)**

(74) Mandataire: **ICB SA**
**Faubourg de l'Hôpital, 3**
**2001 Neuchâtel (CH)**

(54) **COMPOSITION POLYMERISABLE POUR ELECTROLYTE POLYMERE SOLIDE**

(57)     Un aspect de l'invention concerne une composition polymérisable pour un électrolyte polymère solide comprenant un premier polymère comprenant un premier groupement capable de coordonner des cations d'un métal alcalin et/ou d'u métal alcalino-terreux et un deuxième groupement photo-activable et/ou thermo-activable, un oligomère ayant au moins deux groupes photo-activables et/ou thermo-activables, un deuxième polymère comprenant un troisième groupement comprenant un sel d'un métal alcalin ou d'un métal alcalino-terreux, un solvant, et un initiateur de polymérisation permettant d'initier la polymérisation entre le deuxième groupement du premier polymère et les groupes photo-activables et/ou thermo-activables de l'oligomère sous l'effet d'une température comprise entre 20 °C et 150 °C ou d'un rayonnement. D'autres aspects de l'invention concernent un électrolyte polymère solide obtenu par polymérisation de la composition polymérisable de l'invention, un élément de batterie comprenant l'électrolyte polymère solide, et un procédé pour produire un élément de batterie comprenant l'électrolyte polymère solide.

Fig. 6

**Description**

Domaine technique de l'invention

La présente invention se rapporte à une composition pour un électrolyte polymère solide, la composition étant polymérisable. La présente invention se rapporte aussi à un électrolyte polymère solide comprenant ladite composition polymérisée, à un élément de batterie comprenant ledit électrolyte, et à un procédé de production dudit élément de batterie.

Arrière-plan technologique

Des batteries classiques, telles que des batteries du type lithium-ion (Li-ion), comprenant un électrolyte liquide sont connues depuis des décennies. Cependant, il est connu que ces électrolytes liquides peuvent nuire à la sécurité de la batterie, par exemple suite à la génération de dendrites de lithium métallique qui peuvent causer des court-circuits dans la batterie. En outre, il est possible d'avoir des fuites d'électrolyte si l'étanchéité de la batterie est défaillante.

Plus récemment, un nouveau type de batterie a été développé en vue d'améliorer la performance de la batterie, en particulier sa puissance et sa capacité. Il s'agit du type comprenant une anode en métal pur, plus particulièrement en métal alcalin pur ou en métal alcalino-terreux pur, par exemple la batterie du type lithium métal ayant une anode en lithium métallique. Cependant, les électrolytes liquides classiques ne sont pas adaptés à ce type de batterie à cause du contact plus large avec le métal (p.ex. du lithium métallique) que dans les batteries du type métal alcalin ou métal alcalino-terreux - ion (p.ex. Li-ion). Par exemple, ce contact plus élevé peut facilement provoquer des court-circuits.

Récemment, des batteries comprenant un électrolyte solide (anglais : solid state electrolyte, abréviation : SSE) ont été développées. Les électrolytes solides servent à remplacer les électrolytes liquides dans les batteries du type métal alcalin ou métal alcalino-terreux - ion (p.ex. Li-ion) et du type ayant une anode en métal alcalin pur ou en métal alcalino-terreux pur (p.ex. Li-métal), parce qu'ils offrent une solution aux problèmes de sécurité et de fuites liés aux électrolytes liquides.

En général, trois types d'électrolytes solides sont considérés : les électrolytes inorganiques solides, les électrolytes polymères solides, et les électrolytes composites polymériques. Plusieurs électrolytes polymères solides sont connus aujourd'hui, tels qu'un système comprenant le sel $LiN(SO_2CF_3)_2$ dissous dans une matrice polymère d'oxyde de polyéthylène (PEO). L'oxyde de polyéthylène possède des sites de coordination type éther qui permettent la dissociation du sel de lithium et une chaine moléculaire flexible qui facilite le transport ionique, comme le transport des ions de lithium ($Li^+$). D'autres polymères qui sont actuellement utilisés dans les électrolytes polymères solides sont, entre autres, le polycarbonate, des polyesters, des polynitriles (p.ex. le polyacrylonitrile), des polyalcools (p.ex. le poly(acétate de vinyle), et des polymères fluorés (p.ex. le poly(fluorure de vinylidène).

Le document US2013157146 décrit un électrolyte polymère solide ayant une matrice de polymère comprenant des segments $-(CH_2-CH_2-O)-$(basé sur le PEO) obtenus par polymérisation de deux monomères, et un sel de lithium dispersé dans la matrice polymérique. Des exemples du sel de lithium incluent le perchlorate de lithium ($LiClO_4$), le hexafluorophosphate de lithium ($LiPF_6$), le dioxyde de cobalt et de lithium ($LiCoO_2$) et le phosphate de fer et de lithium ($LiFePO_4$).

Cependant, un désavantage de ce type d'électrolyte polymère solide est que l'électrolyte ne possède pas la combinaison de propriétés mécaniques et de propriétés de conductivité ionique suffisamment élevée afin de réaliser des éléments de batterie qui sont dimensionnellement stables et ayant une conductivité ionique suffisante. Par exemple, un système avec une matrice basée sur l'oxyde de polyéthylène a une bonne conductivité ionique mais a une faible stabilité mécanique à une température au-dessus de la température de fusion du PEO (65 °C), et a une bonne stabilité mécanique grâce à la mobilité limitée des chaines mais a une faible conductivité ionique à une température en dessous de la température de fusion du PEO (65 °C).

Le document 'Single-ion BAB triblock copolymers as highly efficient electrolytes for lithium-metal batteries', Bouchet R., Maria S., et al., Nature Materials, vol. 12, pages 452 - 457 (2013), décrit une solution qui consiste en l'utilisation de polymères constitués d'une alternance de blocs rigides et de blocs mous. Les blocs rigides, dérivés du polystyrène, assurent la tenue mécanique. Les blocs mous, étant faits d'oxyde de polyéthylène, assurent une bonne conductivité ionique à des températures supérieures à la température de fusion du PEO (65 °C), telles qu'à 80 °C.

Le document 'UV cross-linked, lithium-conducting ternary polymer electrolytes containing ionic liquids', Kim G.T., Appetecchi G.B., et al., Journal of Power Sources 195 (2010), pages 6130-6137 décrit un électrolyte polymère solide obtenu par une réticulation sous l'effet de radiation UV d'une matrice polymère d'oxyde polyéthylène en présence de $LiN(SO_2CF_3)_2$ (abrévié en LiTFSI) comme le sel de lithium et du liquide ionique N-alkyl-N-methylpyrrolidinium TFSI. Ce liquide ionique a un anion commun avec le sel de lithium, TFSI⁻. L'électrolyte obtenu a une conductivité ionique à température ambiante d'environ 0.33 mS/cm.

Cependant, les ponts de réticulation ne sont pas faciles à contrôler, ce qui résulte en un placement aléatoire, menant à des chaines courtes. Ceci limite ainsi largement la conductivité ionique de ces électrolytes polymères réticulés solides (la valeur de 0.33 mS/cm est considérée dans le domaine comme étant insuffisante pour un élément de batterie commercial). En outre, l'usage d'un liquide ionique rend la formulation collante et donc difficile à manipuler.

Le document WO2014126570 décrit un électrolyte polymère solide comprenant un sel de lithium et un polymère réticulé obtenu par la réticulation des polymères téléchéliques ayant au moins deux groupes d'extrémité photo-activables. Les polymères ont une masse moléculaire avant réticulation comprise entre environ 1000 Daltons et 1000000 Daltons. Cela résulte en une composition pour un électrolyte polymère solide très visqueuse ou même très cristalline, ce qui détériore l'applicabilité sur une surface telle que celle d'une anode ou d'une cathode. En plus, la réticulation nécessite un chauffage de la composition sur une durée de plusieurs heures, typiquement entre 3 heures et 5 heures.

Résumé de l'invention

L'invention a pour but de résoudre un ou plusieurs des problèmes de l'art antérieur. L'invention a pour but de fournir une composition pour électrolyte polymère solide améliorée, qui permette d'obtenir un électrolyte polymère solide ayant d'excellentes propriétés en termes de conductivité ionique, de stabilité mécanique et de résistance mécanique. L'invention a aussi pour but de fournir un procédé d'obtention d'un élément de batterie comprenant un tel électrolyte polymère solide, le procédé étant moins complexe, ayant une durée plus courte et ayant une consommation d'énergie plus basse que celles des procédés de l'art antérieur.

Un premier aspect de l'invention concerne une composition polymérisable pour un électrolyte polymère solide telle que décrite dans les revendications annexées.

La composition polymérisable comprend un premier polymère comprenant un premier groupement et un deuxième groupement. Le premier groupement est capable de coordonner des cations d'un métal alcalin et/ou d'un métal alcalino-terreux. Avantageusement, le premier groupement contient un groupement d'oxyde de polyéthylène (PEO). Le deuxième groupement est photo-activable et/ou thermo-activable. Autrement dit, le deuxième groupement contient un groupe photo-activable et/ou thermo-activable.

Le terme «photo-activable» tel qu'utilisé dans la présente divulgation inclut des composants, des molécules, des groupes ou des groupements qui peuvent être activés sous l'effet d'un rayonnement, tel que - sans être limité à celui-ci - un rayonnement ultraviolet (UV), un rayonnement infrarouge (IR), un rayonnement de la lumière visible, ou des combinaisons de ceux-ci.

Le terme « thermo-activable » tel qu'utilisé dans la présente divulgation inclut des composants, des molécules, des groupes ou des groupements qui peuvent être activés sous l'effet d'un changement de température. En particulier, le changement de température est un réchauffement. Avantageusement, la température d'activation est entre 20 °C et 150 °C, de préférence entre 25 °C et 100 °C.

L'activation par chaleur et/ou par un rayonnement inclut, sans être limitatif, une activation permettant une oligomérisation, une polymérisation ou une réticulation, et/ou l'initiation d'une oligomérisation, une polymérisation ou une réticulation.

La composition polymérisable contient en outre un oligomère ayant au moins deux groupes photo-activables et/ou thermo-activables. Avantageusement, au moins un des groupes photo-activables et/ou thermo-activables est un groupe d'extrémité. Un « groupe d'extrémité » de l'oligomère est considéré comme un groupe qui est présent à une extrémité (de la chaîne) de l'oligomère. Avantageusement, au moins une des extrémités de la chaîne de l'oligomère contient un groupe photo-activable et/ou thermo-activable.

De préférence, chaque extrémité (de la chaîne) de l'oligomère contient au moins un groupe photo-activable et/ou thermo-activable, et l'oligomère est un oligomère téléchélique. Un « oligomère téléchélique » tel qu'utilisé dans la présente divulgation est considéré comme un oligomère capable de subir une polymérisation ultérieure du fait de la présence d'au moins un groupe réactif à chacune des extrémités (de la chaîne) de l'oligomère. De préférence, tous les groupes photo-activables et/ou thermo-activables sont des groupes d'extrémité.

Avantageusement, un ou plusieurs du deuxième groupement du premier polymère et des groupes photo-activables et/ou thermo-activables de l'oligomère est un maléimide.

Avantageusement, l'oligomère a une masse molaire comprise entre 500 g/mol et 5000 g/mol, de préférence entre 750 g/mol et 4000 g/mol.

La composition polymérisable comprend en outre un deuxième polymère. Le deuxième polymère contient un troisième groupement. Le troisième groupement comprend un sel d'un métal alcalin et/ou un sel d'un métal alcalino-terreux. Avantageusement, le métal alcalin contient, ou consiste substantiellement en, du lithium, et le sel est un sel de lithium. Avantageusement, le métal alcalino-terreux contient, ou consiste substantiellement en, du magnésium, et le sel est un sel de magnésium.

La composition polymérisable comprend en outre un solvant. Avantageusement, le solvant permet de solubiliser les composants de la composition polymérisable de façon à obtenir une composition polymérisable liquide. Ceci permet l'application facile de la composition polymérisable à une surface, par exemple une surface d'une électrode, par exemple d'une anode ou d'une cathode. L'application de la composition polymérisable sous forme liquide facilite l'application comparé à des compositions visqueuses ou cristallines.

La composition polymérisable comprend en outre un initiateur de polymérisation. L'initiateur de polymérisation permet d'initier la polymérisation entre le deuxième groupement du premier polymère, les groupes photo-activables et/ou thermo-activables de l'oligomère, et avantageusement le deuxième polymère. L'initiation de la polymérisation, et/ou la polymérisation elle-même, est réalisée sous l'effet d'une température comprise entre 20 °C et 150 °C, de préférence entre 25 °C et 100 °C, ou sous l'effet d'un rayonnement. Avantageusement, le rayonnement contient un ou plusieurs d'un rayonnement UV, d'un rayonnement IR et d'un rayonnement de la lumière visible (VIS).

Avantageusement, la composition polymérisable contient entre 10 et 50 % en poids du premier polymère, entre 1 % et 20 % en poids de l'oligomère, entre 1 % et 20 % en poids du deuxième polymère, entre 20 % et 60 % en poids du solvant, et entre 0.01 % et 2 % en poids de l'initiateur de polymérisation, basé sur le poids total de la composition polymérisable.

La composition polymérisable peut aussi contenir un sel d'un métal alcalin et/ou un sel d'un métal alcalino-terreux. Avantageusement, la composition polymérisable comprend entre 0.5 % et 5 % en poids du sel, basé sur le poids total de la composition polymérisable. Avantageusement, le sel d'un métal alcalin contient, ou substantiellement consiste en, un sel de lithium. Avantageusement, le sel d'un métal alcalino-terreux contient, ou substantiellement consiste en, un sel de magnésium.

Un deuxième aspect de l'invention concerne un électrolyte polymère solide tel que décrit dans les revendications annexées. L'électrolyte polymère solide est obtenu par polymérisation d'une composition polymérisable, de préférence une composition polymérisable selon le premier aspect de l'invention. Avantageusement, la polymérisation est une polymérisation entre le deuxième groupement du premier polymère, un ou plusieurs des groupes photo-activables et/ou thermo-activables de l'oligomère, et avantageusement le deuxième polymère. Avantageusement, la polymérisation est réalisée sous l'effet d'une température comprise entre 20 °C et 150 °C, de préférence entre 25 °C et 100 °C, ou sous l'effet d'un rayonnement. Avantageusement, le rayonnement contient un ou plusieurs d'un rayonnement UV, d'un rayonnement IR et d'un rayonnement de la lumière visible (VIS).

Avantageusement, le premier polymère, l'oligomère et le deuxième polymère sont polymérisé dans l'électrolyte polymère solide. Autrement dit, l'électrolyte polymère solide selon l'invention contient, ou consiste en, un réseau polymérique, avantageusement un réseau linéaire polymérique.

Un troisième aspect de l'invention concerne un élément de batterie tel que décrit dans les revendications annexées. Avantageusement, l'élément de batterie comprend l'électrolyte polymère solide selon le deuxième aspect de l'invention. L'élément de batterie est ainsi un élément de batterie solide.

Avantageusement, l'élément de batterie contient en outre une anode et une cathode. Avantageusement, l'anode et/ou la cathode sont en contact, p.ex. partagent une interface, avec l'électrolyte polymère solide. Avantageusement, l'anode contient un métal alcalin ou un métal alcalino-terreux. Avantageusement, le métal alcalin contient, ou consiste en, du lithium. Avantageusement, le métal alcalino-terreux contient, ou consiste en, du magnésium.

Un quatrième aspect de l'invention concerne un procédé de production d'un élément de batterie comprenant un électrolyte polymère solide. Dans une première étape, une composition polymérisable est formée. Avantageusement, la composition polymérisable est selon le premier aspect de l'invention. La composition polymérisable est formée en mélangeant un premier polymère, comprenant un premier groupement capable de coordonner des cations d'un métal alcalin et/ou d'un métal alcalino-terreux et un deuxième groupement photo-activable et/ou thermo-activable, un oligomère ayant au moins deux groupes photo-activables et/ou thermo-activables, un deuxième polymère comprenant un troisième groupement qui contient un sel d'un métal alcalin ou d'un métal alcalino-terreux et un initiateur de polymérisation avec un solvant.

Ensuite, la composition polymérisable est appliquée à au moins une partie d'une surface d'une anode et/ou à au moins une partie d'une surface d'une cathode. Par exemple, la composition polymérisable peut être appliquée à une surface d'une anode et à une surface d'une cathode.

Ensuite, la composition polymérisable est polymérisée au moins partiellement sous l'effet d'une température comprise entre 20 °C et 150 °C, de préférence entre 25 °C et 100 °C, ou sous l'effet d'un rayonnement. Avantageusement, le rayonnement contient un ou plusieurs d'un rayonnement UV, d'un rayonnement IR et d'un rayonnement de la lumière visible (VIS). Une composition partiellement polymérisée est ainsi obtenue.

Après avoir polymérisé au moins partiellement la composition polymérisable, l'anode et la cathode sont mises en contact de façon à obtenir une structure comprenant la composition polymérisable partiellement polymérisée positionnée entre l'anode et la cathode. Un bon contact, ou une bonne interface, entre l'anode et la composition polymérisable partiellement polymérisée, et entre la cathode et la composition polymérisable partiellement polymérisée est ainsi avantageusement réalisé.

Puis, la polymérisation de la composition polymérisable partiellement polymérisée est finalisée, afin de transformer la composition polymérisable partiellement polymérisée en l'électrolyte polymère solide et d'obtenir un élément de batterie. La polymérisation finale est réalisée en exposant la structure cathode-composition-anode à une température comprise entre 20 °C et 150 °C, de préférence entre 25 °C et 100 °C, ou sous l'effet d'un rayonnement. Avantageusement, le rayonnement contient un ou plusieurs d'un rayonnement UV, d'un rayonnement IR et d'un rayonnement de la lumière visible (VIS).

La composition polymérisable selon l'invention permet d'obtenir des électrolytes polymères solides ayant une excellente conductivité ionique et une excellente stabilité mécanique. En plus, les éléments de batterie selon l'invention contiennent un excellent contact (ou interface) entre les électrodes (l'anode et la cathode) et l'électrolyte polymère solide, ce qui permet de réaliser des éléments de batterie ayant une excellente conductivité ionique et une durée de vie améliorée, comparée aux éléments de batterie selon l'art antérieur. Cette excellente interface est réalisée en particulier par les méthodes de la présente invention.

La composition est aussi facile à appliquer aux électrodes d'un élément de batterie. Le procédé d'obtention de l'électrolyte polymère solide et de l'élément de batterie est particulièrement apte à être implémenté dans les lignes de production en masse.

Brève description des figures

Les buts, avantages et caractéristiques sont montrés dans les figures, qui illustrent des modes d'exécution sans être limitatif :

- la figure 1 représente un premier groupement d'un composant de la composition polymérisable ;

- la figure 2 représente un deuxième groupement d'un composant de la composition polymérisable ;

- la figure 3 représente un premier composant de la composition polymérisable ;

- la figure 4 représente un deuxième composant de la composition polymérisable ;

- la figure 5 représente un troisième composant de la composition polymérisable ;

- la figure 6 représente les composants d'un élément de batterie ;

- la figure 7 représente le courant en fonction du voltage d'une batterie selon l'invention ; et

- la figure 8 représente la capacité spécifique d'une batterie après être chargée-déchargée plusieurs fois.

Description détaillée de l'invention

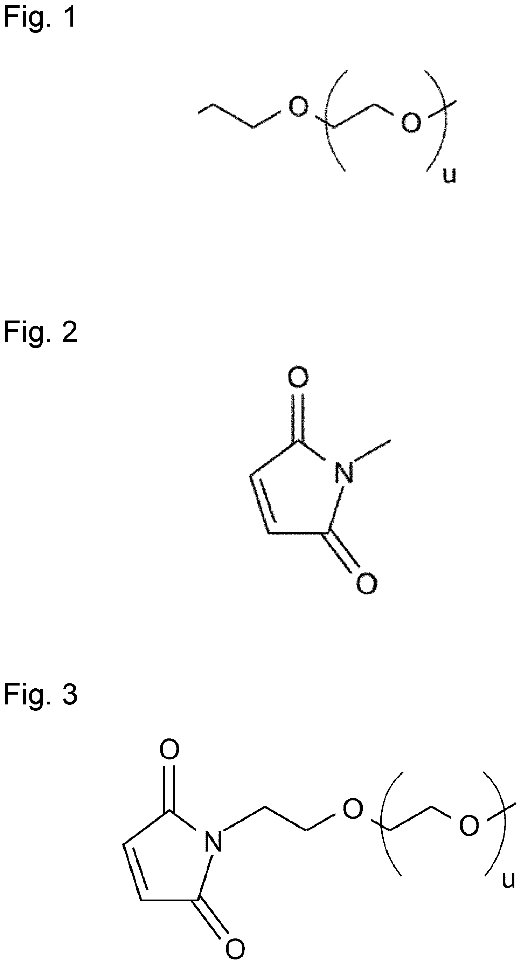

Le premier groupement du premier polymère de la composition polymérisable selon l'invention est capable de coordonner des cations d'un métal alcalin et/ou d'un métal alcalino-terreux, avantageusement les cations du métal alcalin et/ou du métal alcalino-terreux dans l'électrolyte polymère solide selon l'invention, obtenu par polymérisation de la composition polymérisable. Autrement dit, le premier groupement est avantageusement choisi de façon à assurer la conductivité ionique de l'électrolyte polymère solide. Des exemples non-limitatifs du premier groupement sont un groupement d'oxyde de polyéthylène (PEO) tel que montré dans la figure 1, et un groupement de glycol de polyéthyléne (PEG). Avantageusement, dans la figure 1, u indique le nombre de répétitions et est choisi entre 20 et 80, de préférence entre 30 et 70, plus préférentiellement entre 40 et 60, par exemple entre 50 et 55.

Le deuxième groupement du premier polymère de la composition polymérisable selon l'invention est un groupement fourni afin de permettre la polymérisation de la composition polymérisable afin d'obtenir un électrolyte polymère solide. Le deuxième groupement est donc photo-activable et/ou thermo-activable. Des exemples non-limitatifs sont un groupement maléimide, tel que montré dans la figure 2, un groupement acrylate et un groupement méthacrylate.

Avantageusement, le premier polymère a une masse molaire comprise entre 1000 g/mol et 5000 g/mol, de préférence entre 1500 g/mol et 4000 g/mol, tel qu'entre 2000 g/mol et 3000 g/mol, plus préférentiellement entre 2250 g/mol et 2750 g/mol, par exemple entre 2350 g/mol et 2600 g/mol.

Avantageusement, le premier polymère contient entre 0.1 et 0.7 mEq (milli-équivalent) du deuxième groupement par gramme du premier polymère, de préférence entre 0.2 et 0.6 mEq, plus préférentiellement entre 0.3 et 0.5 mEq, par exemple entre 0.35 et 0.45 mEq, ou 0.4 mEq.

Des exemples particuliers du premier polymère sont l'a-methoxy ω-maléimide oxyde de polyéthylène, tel que montré dans la figure 3, le polyéthylène glycol méthacrylate (PEGMA), et l'α-methoxy ω-maléimide polyéthylène glycol.

Avantageusement, la composition polymérisable contient entre 10 % et 50 % en poids du premier polymère, de préférence entre 12 % et 45 % en poids, par exemple entre 15 % et 40 % en poids, basé sur le poids total de la composition polymérisable.

Avantageusement, quand la polymérisation, partielle ou entière, et/ou l'initiation de la polymérisation de la composition polymérisable a lieu sous l'effet de la température, la température est comprise entre 20 °C et 200 °C, de préférence entre 20 °C et 150 °C, plus préférentiellement entre 25 °C et 100 °C, telle qu'entre 30 °C et 80 °C. Dans ce cas, il s'agit des groupes et des groupements qui sont thermo-activables.

Avantageusement, quand la polymérisation, partielle ou entière, et/ou l'initiation de la polymérisation de la composition polymérisable a lieu sous l'effet d'un rayonnement, le rayonnement est un rayonnement ultraviolet (UV), un rayonnement infrarouge (IR), un rayonnement de la lumière visible, ou des combinaisons de ceux-ci. Dans ce cas, il s'agit des groupes et des groupements qui sont photo-activables.

Dans la présente divulgation, il est possible que les groupes et les groupements photo-activables soient également thermo-activables, et vice-versa.

La composition polymérisable contient aussi un oligomère. L'oligomère a au moins deux groupes photo-activables et/ou thermo-activables. Ces groupes peuvent être polymérisés avec le deuxième groupement du premier polymère et/ou avec un troisième groupement d'un deuxième polymère. De préférence, les groupes de l'oligomère peuvent être polymérisés avec au moins le troisième groupement d'un deuxième polymère. Les groupes photo-activables et/ou thermo-activables peuvent être, sans être limitatif, un groupe maléimide, un acrylate et un méthacrylate.

Avantageusement, l'oligomère contient entre 0.1 et 0.7 mEq (milli-équivalent) de groupes photo-activables et/ou thermo-activables par gramme de l'oligomère, de préférence entre 0.2 et 0.9 mEq, plus préférentiellement entre 0.3 et 0.8 mEq, par exemple entre 0.4 et 0.7 mEq, ou entre 0.5 et 0.6 mEq.

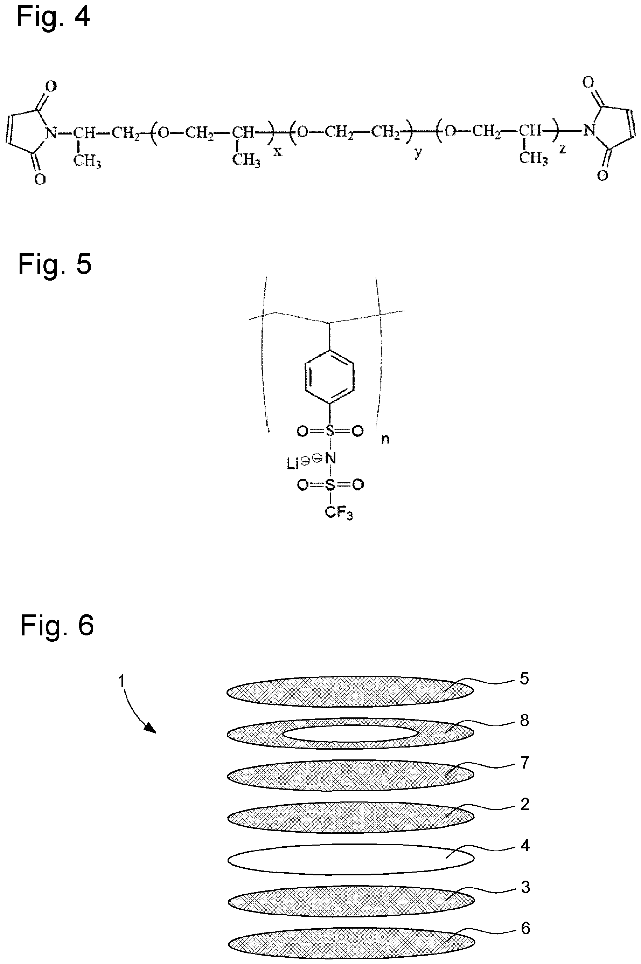

Un exemple de l'oligomère est le PPG-block-PEG-block-PPG, $\alpha,\omega$-bis(maléimide), démontré dans la figure 4. Il s'agit d'un oxyde de polyéthylène et de polypropylène (PEO-PPO) ayant un groupe maléimide à chaque extrémité de la chaîne. Avantageusement, x + z est comprise entre 2 et 20, de préférence entre 5 et 15, plus préférentiellement entre 6 et 12, par exemple entre 8 et 9. Avantageusement, y est comprise entre 20 et 100, de préférence entre 40 et 80, plus préférentiellement entre 50 et 75, par exemple entre 60 et 70, ou entre 62 et 67.

Un autre exemple de l'oligomère est du glycol de polyéthylène (PEG) ayant un groupe méthacrylate (MA) à chaque extrémité de la chaîne (PEG-DiMA).

Avantageusement, l'oligomère a une masse molaire comprise entre 250 g/mol et 10000 g/mol, de préférence entre 500 g/mol et 5000 g/mol, plus préférentiellement entre 750 g/mol et 4000 g/mol, par exemple entre 1000 g/mol et 3750 g/mol, ou entre 2000 g/mol et 3600 g/mol.

Avantageusement, la composition polymérisable contient entre 1 % et 20 % en poids de l'oligomère, de préférence entre 2 % et 15 % en poids, par exemple entre 3 % et 15 % en poids, basé sur le poids total de la composition polymérisable.

Avantageusement, l'oligomère comprend au moins un groupe photo-activable et/ou thermo-activable à chaque extrémité de la chaîne de l'oligomère, l'oligomère étant dans ce cas un oligomère téléchélique. En ajoutant un oligomère téléchélique dans la composition polymérisable, il est possible de mieux contrôler la polymérisation et donc la structure du réseau polymérique obtenu. Avantageusement, le réseau polymérique est un réseau linéaire polymérique. De plus, les chaînes entre deux nœuds de la composition polymérisée (donc l'électrolyte polymère solide) obtenues ainsi sont suffisamment longues pour que la composition polymérisée soit assez « lâche » et que l'électrolyte présente une excellente conductivité ionique.

Avantageusement, l'oligomère est capable d'agir dans l'électrolyte polymère solide comme un plastifiant et/ou un amplificateur de conductivité ionique de l'électrolyte.

Le deuxième polymère de la composition polymérisable contient un troisième groupement. Avantageusement, le troisième groupement comprend un sel d'un métal alcalin et/ou un sel d'un métal alcalino-terreux. Avantageusement, le métal alcalin contient du lithium, du sodium, du potassium, ou des combinaisons de ceux-ci. De préférence, le métal alcalin est du lithium. Avantageusement, le métal alcalino-terreux contient du magnésium, du béryllium, du calcium, ou des combinaisons de ceux-ci. De préférence, le métal alcalino-terreux est du magnésium.

Avantageusement, dans l'électrolyte polymère solide obtenu, le troisième groupement est capable de fournir des cations du métal alcalin et/ou du métal alcalino-terreux. Avantageusement, les cations du métal alcalin et/ou du métal alcalino-terreux peuvent, dans l'électrolyte polymère solide, se déplacer le long du premier polymère et de l'oligomère. Ce déplacement induit la conductivité ionique de l'électrolyte polymère solide. De plus, le troisième groupement, étant intégré à la chaîne du deuxième polymère, permet aussi, dans l'électrolyte, de réduire la mobilité des contre-anions du métal alcalin et/ou du métal alcalino-terreux, ce qui permet d'accroître la mobilité du métal alcalin et/ou du métal alcalino-terreux.

La figure 5 montre un exemple du deuxième polymère de la composition polymérisable de l'invention, dans lequel le troisième groupement est du lithium bis(trifluorométhane)sulfimide (LiSTFSI, CAS n° 210226-98-5).

Avantageusement, la composition polymérisable contient entre 1 % et 20 % en poids du deuxième polymère, de préférence entre 2 % et 15 % en poids, par exemple entre 5 % et 10 % en poids, basé sur le poids total de la composition polymérisable.

Le solvant dans la composition polymérisable permet avantageusement de solubiliser les composants de la composition de façon à obtenir une composition polymérisable liquide. Avantageusement, le solvant permet d'obtenir une composition liquide qui est facile à étaler sur une surface. Ainsi il est possible d'appliquer facilement la composition polymérisable à une surface avant d'initier au moins partiellement la polymérisation. Un exemple du solvant inclut, sans être limitatif, le propylène carbonate.

Avantageusement, la composition polymérisable contient entre 20 % et 60 % en poids du solvant, de préférence entre 25 % et 55 % en poids, par exemple entre 30 % et 50 % en poids, basé sur le poids total de la composition polymérisable.

La composition comprend aussi un initiateur de polymérisation. L'initiateur de polymérisation permet d'initier la polymérisation entre le deuxième groupement du premier polymère, les groupes photo-activables et/ou thermo-activables de l'oligomère et le troisième groupement du deuxième polymère. L'initiation de la polymérisation, et/ou la polymérisation elle-même, est réalisée sous l'effet d'une température comprise entre 20 °C et 200 °C, de préférence entre 20 °C et 150 °C, plus préférentiellement entre 25 °C et 100 °C, telle que entre 30 °C et 80 °C, ou sous l'effet d'un rayonnement. Avantageusement, le rayonnement contient un ou plusieurs d'un rayonnement UV, d'un rayonnement IR et d'un rayonnement de la lumière visible (VIS).

L'initiateur de polymérisation est avantageusement de nature radicalaire. Cela veut dire, dans la présente divulgation, que l'initiateur de polymérisation est capable de libérer des radicaux sous l'effet de la température ou d'un rayonnement tel que décrit ci-dessus. Ces radicaux initient ensuite la polymérisation entre le premier polymère, le deuxième polymère et l'oligomère de la composition.

Des exemples de l'initiateur de polymérisation incluent, sans être limitatif, le 2,2'-azobis(isobutyronitrile) (AIBN) et 2-hydroxy-4'-(2-hydroxyéthoxy)-2-méthylpropiophenone (numéro CAS 106797-53-9).

Avantageusement, la composition polymérisable contient entre 0.01 % et 2 % en poids de l'initiateur de polymérisation, de préférence entre 0.1 % et 1.5 % en poids, par exemple entre 0.25 % et 1 % en poids, basé sur le poids total de la composition polymérisable.

La composition polymérisable peut aussi contenir un sel d'un métal alcalin et/ou un sel d'un métal alcalino-terreux. Avantageusement, le sel d'un métal alcalin contient, ou substantiellement consiste en, un sel de lithium. Avantageusement, le sel d'un métal alcalino-terreux contient, ou substantiellement consiste en, un sel de magnésium. Des exemples non-limitatifs des sels incluent le lithium bis(fluorosulfonyl) imide (LIFSI) et le lithium bis(trifluoromethanesulfonyl) imide (LITFSI).

Les inventeurs ont découvert de façon surprenante qu'en ajoutant un sel d'un métal alcalin et/ou un sel d'un métal alcalino-terreux dans la composition polymérisable, l'électrolyte polymérisé obtenu a une meilleure conductivité ionique comparé aux électrolytes obtenus d'une composition sans sel d'un métal alcalin et/ou un sel d'un métal alcalino-terreux ajouté. Les inventeurs pensent que la conductivité augmentée est réalisée grâce à une synergie entre le sel du troisième groupement du deuxième polymère et le sel séparé ajouté dans la composition.

Avantageusement, si la composition polymérisable comprend un sel d'un métal alcalin et/ou un sel d'un métal alcalino-terreux, la composition contient entre 0.5 % et 5 % en poids du sel, de préférence entre 0.75 % et 4 % en poids, par exemple entre 1 % et 3 % en poids, basé sur le poids total de la composition polymérisable.

Un électrolyte polymère solide est obtenu par polymérisation d'une composition polymérisable selon la présente divulgation. Avantageusement, la polymérisation est une polymérisation entre le deuxième groupement du premier polymère et un ou plusieurs des groupes photo-activables et/ou thermo-activables de l'oligomère téléchélique. Avantageusement, la polymérisation est réalisée sous l'effet de la température ou sous l'effet d'un rayonnement tel que décrit ci-dessus.

Avantageusement, le premier polymère, l'oligomère et le deuxième polymère sont polymérisés dans l'électrolyte polymère solide, ainsi formant un réseau polymérique, avantageusement un réseau linéaire polymérique.

La présente divulgation concerne aussi un élément de batterie comprenant un électrolyte polymère solide selon l'invention. L'élément de batterie est ainsi un élément de batterie solide. L'élément de batterie peut être une batterie secondaire.

La figure 6 montre un mode d'exécution d'un élément de batterie 1. L'élément de batterie 1 a une configuration du type pile bouton, connu dans l'art antérieur comme la configuration du type CR2032.

L'élément de batterie 1 comprend une anode 2 et une cathode 3. L'élément de batterie 1 comprend en plus un électrolyte polymère solide 4 entre l'anode 2 et la cathode 3.

Avantageusement, l'anode contient un métal alcalin ou un métal alcalino-terreux. Avantageusement, le métal alcalin contient, ou consiste en, du lithium. Avantageusement, le métal alcalino-terreux contient, ou consiste en, du magnésium.

Avantageusement, l'élément de batterie 1 comprend en outre un couvercle de pile bouton 5, une base de pile bouton 6, une entretoise 7 et un ressort 8. L'entretoise 7 et le ressort 8 réalisent un bon contact entre les autres composants 2, 3, 4, 5, 6 de l'élément de batterie 1.

La présente invention concerne en outre un procédé de production d'un élément de batterie comprenant un électrolyte polymère solide. Avantageusement, l'élément de batterie est un élément de batterie selon la présente divulgation. Avantageusement, l'électrolyte polymère solide est un électrolyte polymère solide selon la présente divulgation.

D'abord, une composition polymérisable est formée. Selon un premier mode d'exécution, un premier polymère comprenant un premier groupement capable de coordonner des cations d'un métal alcalin et/ou d'u métal alcalino-terreux et un deuxième groupement photo-activable et/ou thermo-activable, un oligomère ayant au moins deux groupes photo-activables et/ou thermo-activables, un deuxième polymère comprenant un troisième groupement qui contient un sel d'un métal alcalin ou d'un métal alcalino-terreux, un initiateur de polymérisation et optionnellement un sel d'un métal alcalin et/ou un sel d'un métal alcalino-terreux sont mélangés. Un solvant peut être ajouté en même temps avant de mélanger les composants, ou peut être ajouté en une ou plusieurs portions après avoir mélangé les composants.

Selon un autre mode d'exécution, au moins deux des composants mentionnés ci-dessous peuvent être mélangés, par exemple avec une première portion du solvant, ainsi formant un premier mélange. Au moins un, par exemple un ou deux, autre mélange peut être formé en mélangeant les autres composants avec une deuxième portion, par exemple le reste, du solvant. Ensuite, les mélanges peuvent être combinés et mélangés, ainsi formant la composition polymérisable.

La formation de la composition polymérisable n'est pas limitée à ces deux modes d'exécution, et d'autres modes d'exécution connu dans l'art antérieur peuvent aussi être appliqués.

La composition polymérisable ainsi obtenue est sous forme liquide. Elle est ensuite appliquée à au moins une partie d'une surface de l'anode et/ou à au moins une partie d'une surface d'une cathode. Par exemple, la composition polymérisable peut être appliquée de façon à couvrir une surface entière d'une cathode. Avantageusement, la composition polymérisable est appliquée à une surface d'une anode et à une surface d'une cathode.

L'application à une surface de la composition polymérisable peut être réalisée par des moyens connus de l'art antérieur, par exemple par du moulage. Une couche de composition polymérisable est ainsi déposée. Avantageusement, la couche a une épaisseur entre 1 $\mu$m et 1 mm, de préférence entre 50 $\mu$m et 750 $\mu$m, plus préférentiellement entre 100 $\mu$m et 500 $\mu$m, par exemple entre 250 $\mu$m et 400 $\mu$m. L'application de la composition polymérisable sous forme liquide facilite l'application comparé à des compositions visqueuses ou cristallines.

Ensuite, la composition polymérisable est polymérisée au moins, et de préférence, partiellement sous l'effet d'une température comprise entre 20 °C et 200 °C, de préférence entre 20 °C et 150 °C, plus préférentiellement entre 25 °C et 100 °C, telle qu'entre 30 °C et 80 °C, ou sous l'effet d'un rayonnement. Avantageusement, le rayonnement contient un ou plusieurs d'un rayonnement UV, d'un rayonnement IR et d'un rayonnement de la lumière visible (VIS). Une composition partiellement polymérisée est ainsi obtenue.

Avantageusement, cette étape de polymérisation (au moins) partielle sous l'effet d'un rayonnement, de préférence un rayonnement UV, a une durée comprise entre 5 secondes et 20 minutes, par exemple entre 10 secondes et 15 minutes, de préférence entre 20 secondes et 10 minutes, plus préférentiellement entre 30 secondes et 5 minutes, telle que 4 minutes, 3 minutes, 2 minutes, 1 minute, ou 55 secondes, 50 secondes ou 45 secondes. Une telle durée facilite l'implémentation du procédé dans des lignes de production industrielles.

Avantageusement, si la polymérisation (au moins) partielle est effectuée sous l'effet de la température, elle a une durée comprise entre 1 minute et 5 heures, de préférence entre 5 minutes et 4 heures, par exemple entre 10 minutes et 3 heures, entre 20 minutes et 2,5 heures, ou entre 30 minutes et 2 heures.

Les inventeurs ont découvert que cette étape de polymérisation de préférence partielle avant de mettre en contact l'anode et la cathode permet d'éviter que les électrodes soient en court-circuit. Comme la composition polymérisable est liquide, elle a une faible résistance mécanique. La polymérisation au moins partielle augmente la résistance mécanique de la composition, ainsi évitant que les électrodes soient en court-circuit au moment où elles sont mises en contact.

Les inventeurs ont également découvert que cette étape de polymérisation de préférence partielle permet un bon contact (une bonne interface) entre les électrodes et la composition partiellement polymérisée. Cela permet également un bon contact entre les deux couches de la composition partiellement polymérisée si la composition est appliquée à l'anode et à la cathode.

Ensuite, l'anode et la cathode sont mises en contact de façon à obtenir une structure comprenant la composition polymérisable partiellement polymérisée positionnée entre l'anode et la cathode. Un bon contact, ou une bonne interface, entre l'anode et la composition polymérisable partiellement polymérisée, et entre la cathode et la composition polymérisable partiellement polymérisée est ainsi réalisé. Cela permet d'obtenir des éléments de batterie ayant une excellente conductivité ionique.

Puis, la polymérisation de la composition polymérisable qui est partiellement polymérisée est finalisée, afin de convertir la composition polymérisable partiellement polymérisée en l'électrolyte polymère solide et d'obtenir un élément de batterie. La polymérisation finale est fait en exposant la structure cathode-composition-anode à une température comprise entre 20 °C et 200 °C, de préférence entre 20 °C et 150 °C, plus préférentiellement entre 25 °C et 100 °C, telle qu'entre 30 °C et 80 °C, ou sous l'effet d'un rayonnement. Avantageusement, le rayonnement contient un ou plusieurs d'un rayonnement UV, d'un rayonnement IR et d'un rayonnement de la lumière visible (VIS). Une composition polymérisée est ainsi obtenue.

Avantageusement, cette étape de polymérisation finale ou complète sous l'effet d'un rayonnement, de préférence un rayonnement UV, a une durée comprise entre 5 secondes et 20 minutes, par exemple entre 10 secondes et 15 minutes, de préférence entre 20 secondes et 10 minutes, plus préférentiellement entre 30 secondes et 5 minutes, telle que 4 minutes, 3 minutes, 2 minutes, 1 minute, 55 secondes, 50 secondes ou 45 secondes. Une telle durée facilite l'implémentation du procédé dans des lignes de production industrielles.

Avantageusement, si la polymérisation finale ou complète est effectuée sous l'effet de la température, elle a une durée comprise entre 1 minute et 10 heures, de préférence entre 10 minutes et 7,5 heures, par exemple entre 30 minutes et 5 heures, entre 45 minutes et 4 heures, ou entre 1 heure et 3 heures.

Selon un deuxième mode d'exécution du procédé, la composition polymérisable est d'abord partiellement polymérisée, et elle est ensuite appliquée à au moins une partie d'une surface de l'anode et/ou à au moins une partie d'une surface d'une cathode. Puis la polymérisation est finalisée.

Exemple

Une composition polymérisable a été produite en ajoutant 0.6 grammes d'a-methoxy ω-maléimide oxyde de polyéthylène (un premier polymère), 0.085 grammes de PPG-block-PEG-block-PPG, α,ω-bis(maléimide) (un oligomère téléchélique), 0.14 grammes de STFSILi (un troisième groupement du deuxième polymère), 0.027 grammes de LiFSI (un sel de lithium) à 0.75 grammes de propylène carbonate (le solvant). La solution a ensuite été agitée pendant 12 heures. Après 12 heures, 0.0125 grammes d'AIBN comme l'initiateur de polymérisation ont été ajouté et la composition polymérisable a été agitée pendant 10 minutes.

Ensuite, la composition a été appliquée sur une anode comprenant du titanate de lithium ($Li_2TiO_3$, noté comme LTO), et sur une cathode comprenant du phosphate de fer et de lithium ($LiFePO_4$, noté comme LFP). Les électrodes recouvertes de la composition ont ensuite été soumises à un rayonnement UV pendant 1 minute à 200 W (OMNICURE Series 2000, longueur d'onde comprise entre 320 nm - 500 nm) afin de polymériser au moins partiellement la composition.

L'anode et la cathode avec la composition au moins partiellement polymérisée ont ensuite été mises en contact et ont été déposées dans un boîtier du type CR2032 contenant 3 disques d'inox de 0.8 mm d'épaisseur et 17 mm de diamètre. Le boîtier a été scellé à l'aide d'une presse.

Puis, la polymérisation a été finalisée en chauffant l'ensemble dans un four à 80 °C pendant 3 heures.

La conductivité ionique de l'électrolyte polymère solide a été mesurée par spectroscopie d'impédance électrochimique (EIS) à de différentes températures, suivi par le mesurage de la conductivité ionique selon la formule (I)

$$\sigma = \frac{I}{R_b * S} \qquad (I)$$

dans laquelle

- $\sigma$ représente la conductivité ionique,

- Rb représente la résistance mesurée,

- I représente l'épaisseur de l'électrolyte polymère solide, et

- S représente la surface de l'électrolyte.

La conductivité ionique mesurée ainsi était de 0.51 mS/cm, ce qui est en dessus de la valeur minimale de 0.1 mS/cm qui garantit une conductivité ionique suffisante.

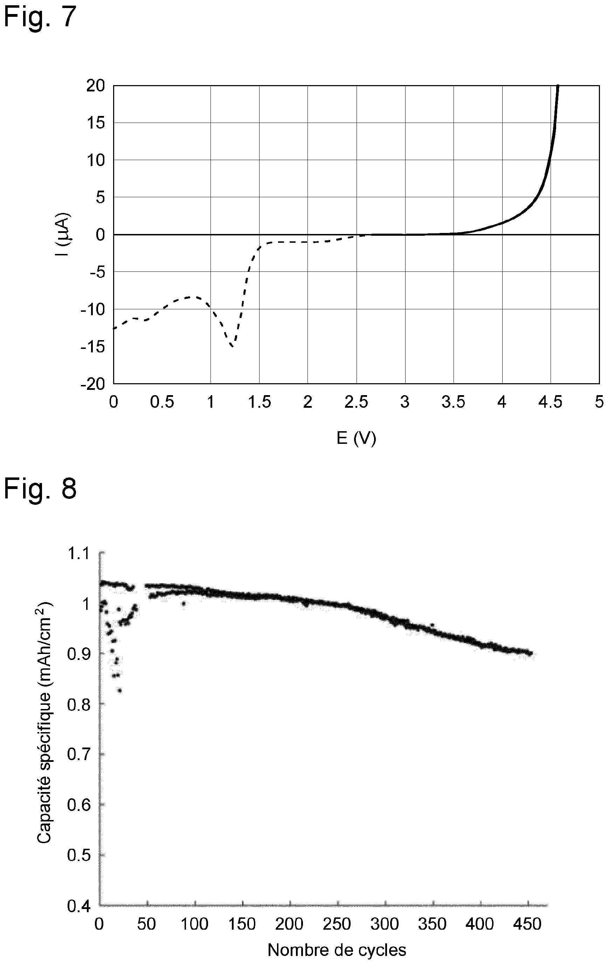

La figure 7 montre le courant en fonction du voltage. Il est clair que la fenêtre de stabilité électrochimique de l'électrolyte est de 1,5 V à 4 V.

La durée de vie de la batterie a été testée en chargeant et déchargeant la batterie pendant plus de 450 cycles entre 1.4 V et 1.5 V. La vitesse de cyclage était de C/20, ce qui correspond à une charge de 0.1 mA. La charge était faite en appliquant un courant constant et la décharge était faite en appliquant le même courant mais en négatif. Pendant chaque cycle, la batterie a été chargée et déchargée à 100 %.

Les résultats sont montrés sur la figure 8, qui représente la capacité spécifique en fonction du nombre de cycles, dans lequel un cycle veut dire un cycle complet de charge-décharge. Il ressort de la figure 8 que la perte de capacité spécifique après 200 cycles est en dessous de 5 % par rapport à la capacité spécifique du premier cycle. Il est donc clair que la batterie a une excellente stabilité de capacité et donc une excellente résistance à des charges et décharges répétées et donc une excellente durée de vie.

Nomenclature

1.   élément de batterie
2.   anode
3.   cathode
4.   électrolyte polymère solide
5.   couvercle de pile bouton
6.   base de pile bouton
7.   entretoise
8.   ressort

**Revendications**

**1.** Une composition polymérisable pour un électrolyte polymère solide comprenant :

- Un premier polymère comprenant un premier groupement et un deuxième groupement, le premier groupement étant capable de coordonner des cations d'un métal alcalin et/ou d'u métal alcalino-terreux, le deuxième groupement étant photo-activable et/ou thermo-activable ;
- Un oligomère ayant au moins deux groupes photo-activables et/ou thermo-activables ;
- Un deuxième polymère comprenant un troisième groupement, le troisième groupement comprenant un sel d'un métal alcalin ou d'un métal alcalino-terreux ;
- Un solvant ; et
- Un initiateur de polymérisation ;

**caractérisée en ce que** l'initiateur de polymérisation permet d'initier la polymérisation entre le deuxième groupement du premier polymère et les groupes photo-activables et/ou thermo-activables de l'oligomère sous l'effet d'une température comprise entre 20 °C et 150 °C ou d'un rayonnement.

2. La composition polymérisable selon la revendication 1, comprenant entre 10 % et 50 % en poids du premier polymère, entre 1 % et 20 % en poids de l'oligomère, entre 1 % et 20 % en poids du deuxième polymère, entre 20 % et 60 % en poids du solvant, et entre 0.01 % et 2 % en poids de l'initiateur de polymérisation, basé sur le poids total de la composition polymérisable.

3. La composition polymérisable selon l'une quelconque des revendications précédentes, comprenant en outre un sel d'un métal alcalin et/ou un sel d'un métal alcalino-terreux.

4. La composition polymérisable selon la revendication 3, comprenant entre 0.5 % et 5 % en poids du sel, basé sur le poids total de la composition polymérisable.

5. La composition polymérisable selon l'une quelconque des revendications précédentes, dans laquelle le premier groupement contient un groupement d'oxyde de polyéthylène.

6. La composition polymérisable selon l'une quelconque des revendications précédentes, dans laquelle au moins un des groupes photo-activables et/ou thermo-activables est un groupe d'extrémité.

7. La composition polymérisable selon la revendication 6, dans laquelle tous les groupes photo-activables et/ou thermo-activables de l'oligomère sont des groupes d'extrémité, et l'oligomère est un oligomère téléchélique.

8. La composition polymérisable selon l'une quelconque des revendications précédentes, dans laquelle un ou plusieurs du deuxième groupement et des groupes photo-activables et/ou thermo-activables est un maléimide.

9. La composition polymérisable selon l'une quelconque des revendications précédentes, dans laquelle l'oligomère a une masse molaire comprise entre 500 g/mol et 5000 g/mol, de préférence entre 750 g/mol et 4000 g/mol.

10. Un électrolyte polymère solide obtenu par polymérisation d'une composition polymérisable selon l'une quelconque des revendications précédentes, **caractérisé en ce que** la polymérisation est une polymérisation entre le deuxième groupement du premier polymère, les groupes photo-activables et/ou thermo-activables de l'oligomère et avantageusement le deuxième polymère sous l'effet d'une température comprise entre 20 °C et 150 °C ou d'un rayonnement.

11. L'électrolyte polymère solide selon la revendication 9, dans lequel la polymérisation est réalisée sous l'effet d'un rayonnement UV.

12. Un élément de batterie, comprenant l'électrolyte polymère solide selon l'une quelconque des revendications 10 à 11.

13. Un élément de batterie selon la revendication 12, comprenant en outre une anode comprenant un métal alcalin ou un métal alcalino-terreux.

14. Un élément de batterie selon la revendication 13, dans lequel le métal alcalin est du lithium ou le métal alcalino-terreux est du magnésium.

15. Un procédé de production d'un élément de batterie selon l'une quelconque des revendications 12 à 14 comprenant un électrolyte polymère solide selon l'une quelconque des revendications 9 à 10, comprenant les étapes de :

- Mélanger un premier polymère comprenant un premier groupement et un deuxième groupement, le premier groupement étant capable de coordonner des cations d'un métal alcalin et/ou d'u métal alcalino-terreux, le deuxième groupement étant photo-activable et/ou thermo-activable, un oligomère ayant au moins deux groupes photo-activables et/ou thermo-activables, un deuxième polymère comprenant un troisième groupement, le troisième groupement comprenant un sel d'un métal alcalin ou d'un métal alcalino-terreux et un initiateur de polymérisation dans un solvant, ainsi obtenant une composition polymérisable ;
- Polymériser au moins partiellement la composition polymérisable sous l'effet d'une température comprise entre 20 °C et 150 °C ou d'un rayonnement ;
- Appliquer la composition polymérisable partiellement polymérisée à au moins une partie d'une surface d'une anode et/ou à au moins une partie d'une surface d'une cathode ;
- Mettre en contact l'anode et la cathode de façon à obtenir une structure comprenant la composition polymérisable partiellement polymérisée positionnée entre l'anode et la cathode ; et
- Polymériser entièrement la composition polymérisable partiellement polymérisée sous l'effet d'une température comprise entre 20 °C et 150 °C ou d'un rayonnement, ainsi obtenant un élément de batterie comprenant un électrolyte polymère solide.

## Fig. 1

## Fig. 2

## Fig. 3

## Fig. 4

## Fig. 5

## Fig. 6

Fig. 7

Fig. 8

Europäisches
Patentamt

European
Patent Office

Office européen
des brevets

**RAPPORT DE RECHERCHE EUROPEENNE**

Numéro de la demande

**EP 22 18 2849**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2005/003276 A1 (SAKAI TETSUO [JP] ET AL) 6 janvier 2005 (2005-01-06) * methoxy polyethylene monoacrylate+urethane acrylate+initiator; exemples * | 1-15 | INV. H01M4/38 H01M4/46 H01M10/0565 |
| A | RENAUD BOUCHET ET AL: "Single-ion BAB triblock copolymers as highly efficient electrolytes for lithium-metal batteries", NATURE MATERIALS, vol. 12, no. 5, 31 mars 2013 (2013-03-31), pages 452-457, XP055316945, London ISSN: 1476-1122, DOI: 10.1038/nmat3602 * PEO+PSTFSILi * | 1-15 | |
| A | US 2016/190641 A1 (LEE MYUNGJIN [KR] ET AL) 30 juin 2016 (2016-06-30) * LiPSTFSI+PEGA+initiator; exemple comp. ex.3 * | 1-15 | |

DOMAINES TECHNIQUES RECHERCHES (IPC)

**H01M**

Le présent rapport a été établi pour toutes les revendications

| Lieu de la recherche | Date d'achèvement de la recherche | Examinateur |
|---|---|---|
| Munich | 22 décembre 2022 | Duval, Monica |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 18 2849

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-12-2022

| Document brevet cité au rapport de recherche | Date de publication | Membre(s) de la famille de brevet(s) | Date de publication |
|---|---|---|---|
| US 2005003276 A1 | 06-01-2005 | AU 2002367181 A1 | 15-07-2003 |
| | | CA 2464075 A1 | 10-07-2003 |
| | | CN 1620736 A | 25-05-2005 |
| | | EP 1460706 A1 | 22-09-2004 |
| | | JP WO2003056652 A1 | 12-05-2005 |
| | | KR 20040063938 A | 14-07-2004 |
| | | US 2005003276 A1 | 06-01-2005 |
| | | WO 03056652 A1 | 10-07-2003 |
| US 2016190641 A1 | 30-06-2016 | KR 20160079574 A | 06-07-2016 |
| | | US 2016190641 A1 | 30-06-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013157146 A

- WO 2014126570 A

**Littérature non-brevet citée dans la description**

- **BOUCHET R. ; MARIA S. et al.** Single-ion BAB tri-block copolymers as highly efficient electrolytes for lithium-metal batteries. *Nature Materials,* 2013, vol. 12, 452-457

- **KIM G.T. ; APPETECCHI G.B. et al.** UV cross-linked, lithium-conducting ternary polymer electrolytes containing ionic liquids. *Journal of Power Sources,* 2010, vol. 195, 6130-6137